# EUROPEAN PATENT SPECIFICATION

(11) **EP 4 129 667 B1**
(45) Date of publication and mention of the grant of the patent: **30.04.2025**
(21) Application number: 21775575.0
(22) Date of filing: 09.03.2021
(51) Int. Cl.: B32B 27/18, B32B 27/30, B65D 65/40, C08K 5/00, A61J 1/03, C08K 3/32, C09D 7/47, C08F 14/08, C09D 127/08

(54) **MULTILAYER FILM, AND BLISTER PACK FOR MEDICINE**
MEHRSCHICHTFOLIE UND BLISTERPACKUNG FÜR DIE MEDIZIN
FILM MULTICOUCHE ET EMBALLAGE COQUE POUR MÉDICAMENT

(30) Priority: 27.03.2020 JP 2020059045
(43) Date of publication of application: 08.02.2023
(73) Proprietor: Asahi Kasei Kabushiki Kaisha, Tokyo 1000006 (JP)
(72) Inventor: ONISHI Tokiharu, Tokyo 100-0006 (JP); YAMASAKI Naoaki, Tokyo 100-0006 (JP)
(74) Representative: D Young & Co LLP
(86) International application number: PCT/JP2021/009353
(87) International publication number: WO 2021/193031

(56) References cited:
- EP-A1- 2 818 485
- EP-A2- 0 290 115
- WO-A1-2021/122903
- CN-A- 102 766 231
- CN-A- 103 059 202
- CN-A- 105 367 701
- JP-A- 2005 048 109
- JP-A- 2007 169 665
- JP-A- 2013 163 799
- JP-A- H08 239 536
- JP-A- H08 239 536
- JP-A- S4 858 078
- JP-B2- 4 729 373

## Description

### TECHNICAL FIELD

The present disclosure relates to a multilayer film, and a blister pack for a medication.

### BACKGROUND

In order to preserve the quality of foods and medications, it is necessary to block gases such as oxygen, nitrogen, carbon dioxide, and water vapor in the atmosphere and provide hermetic sealing. Among various types of resins, vinylidene chloride-based copolymer latexes are suitable for food and medication packaging applications because they display high barrier properties against water vapor and oxygen upon being applied onto a film.

In recent years, there has been demand for even higher gas barrier properties in such film applications. Although performing recoating of a latex so as to form a thicker barrier layer is effective for resolving this issue, conventional latexes have suffered from problems in terms of deterioration of coated surface external appearance and loss of transparency. Specifically, in a situation in which the surface tension of a latex water dispersion is not within an appropriate range, leveling failure may occur, an orange peel pattern may be formed during recoating, and foaming may occur in a film when shaping is performed at high temperature in order to shape a blister pack for a medication, for example.

A variety of studies have been conducted in light of the issues set forth above.

EP2818485A1 discloses a latex comprising a vinylidene chloride copolymer obtainable by emulsion polymerizing 70 to 95 parts by mass of vinylidene chloride with 30 to 5 parts by mass of one or more other monomer(s) copolymerizable with vinylidene chloride, with the proviso that the total of vinylidene chloride and the other monomer(s) is 100 parts by mass, characterized in that the weight average molecular weight, Mw, of the copolymer is from 120,000 to 300,000.

### CITATION LIST

### Further Relevant Patent Literature

PTL 1: JP-S48-58078A
PTL 2: JP2000-239468A
PTL 3: JP-S47-29373B
PTL 4: JP-H8-239536A

### SUMMARY

### (Technical Problem)

Patent Literature (PTL) 1 discloses compounding sodium dodecylbenzenesulfonate as an amphiphilic compound in an amount of 2.5 parts by mass relative to resin solid content when obtaining a vinylidene chloride copolymer latex by emulsion polymerization. However, foaming occurs during shaping and recoatability is unsatisfactory because a large amount of this amphiphilic compound is added with the aim of causing suitable progress of polymerization, and thus the effects in the present application are not achieved.

PTL 2 discloses the inclusion of a specific non-ionic amphiphilic compound as a defoamer in an amount of from 0.005 parts by mass to 0.12 parts by mass in a vinylidene chloride-based copolymer latex. However, coatability is unsatisfactory because too little of the compound is added.

PTL 3 discloses that in multilayer coating of a substrate with a polymer that includes 50 weight% or more of an anionic amphiphilic substance among all surfactant, the multilayer coating is performed with a vinylidene chloride-based copolymer that includes 55 weight% or more of a non-ionic amphiphilic substance interposed between layers. However, foaming occurs during shaping as a result of the water content and crystallinity being unsatisfactory, and thus the effects in the present application are not achieved.

PTL 4 discloses an example in which a hydroxyl group-containing radical polymerizable monomer is used and in which sodium dodecylsulfonate is used, but foaming occurs during shaping as a result of the water content being unsatisfactory, and thus the effects in the present application are not achieved.

Accordingly, an object of the present disclosure is to provide a water dispersion that has excellent coatability in recoating and that yields a uniform coating film without leveling failure, orange peel patterning, or the occurrence of foaming during film shaping.

### (Solution to Problem)

As a result of diligent research aimed at solving problems such as set forth above, it was discovered that excellent coatability in recoating can be achieved and that a uniform coating film can be obtained without leveling failure, orange peel patterning, or foaming by compounding a specific amount of a specific amphiphilic compound with a halogenated vinyl polymer water dispersion.

Specifically, primary features of the present disclosure are as follows. A multilayer film comprising a layer obtained by applying a halogenated vinyl polymer water dispersion onto a base film formed of a polymer differing from the halogenated vinyl polymer,
wherein the halogenated vinyl polymer water dispersion comprises:
   a vinylidene chloride polymer; and
   0.3 mass% or more and 1.5 mass% or less, relative to 100 mass% of resin solid content contained in the water dispersion, of an anionic amphiphilic compound, wherein the anionic amphiphilic compound is sodium dodecylbenzene sulfonate, and
wherein the base film is made of polyvinyl chloride, polyester, polyamide, or polypropylene.

The halogenated vinyl polymer water dispersion may further comprise sodium pyrophosphate.

The halogenated vinyl polymer water dispersion may comprise more than 0.12 mass% of a nonionic amphiphilic compound relative to 100 mass% of resin solid content contained in the water dispersion.

The base film is preferably made of polyvinyl chloride.

The multilayer film may comprise two or more layers of the layer obtained by applying the halogenated vinyl polymer water dispersion, wherein at least one layer among the layers obtained by applying the halogenated vinyl polymer water dispersion may have a thickness of 1 µm or more, or even a thickness of 30 µm or more.

The multilayer film may have a water content of 1 mass% or less.

The the layer obtained by applying the halogenated vinyl polymer water dispersion optionally has a relative crystallinity of 1.1 or more as measured by a Fourier transform infrared spectrophotometer.

The invention also provides a blister pack for a medication comprising the multilayer film

### (Advantageous Effect)

As a result of having the configuration set forth above, a halogenated vinyl polymer water dispersion according to the present disclosure has excellent coatability in recoating and can form a uniform coating film without leveling failure, orange peel patterning, or the occurrence of foaming during film shaping.

### BRIEF DESCRIPTION OF THE DRAWINGS

In the accompanying drawings:
FIG. 1 illustrates an evaluation standard for coatability, wherein (a) is a very good evaluation (Circle), (b) is a good evaluation (Triangle), and (c) is a poor evaluation (Cross); and
FIG. 2 illustrates an evaluation standard for recoatability, wherein (a) is a very good evaluation (Circle), (b) is a good evaluation (Triangle), and (c) is a poor evaluation (Cross).

### DETAILED DESCRIPTION

The following provides a detailed description of an embodiment of the present disclosure (hereinafter, referred to simply as the "present embodiment").

### [Halogenated vinyl polymer water dispersion]

A halogenated vinyl polymer water dispersion of the present embodiment contains a halogenated vinyl polymer and also contains 0.3 mass% or more and less than 1.5 mass% or less, relative to 100 mass% of resin solid content, of an anionic amphiphilic compound that is sodium dodecylbenzene sulfonate. As a result, coatability in recoating is excellent, leveling failure and orange peel patterning have a low tendency to occur, and a uniform coating film can be obtained without the occurrence of foaming during film shaping.

The halogenated vinyl polymer water dispersion of the present embodiment may further contain more than 0.12 mass% of a non-ionic amphiphilic compound relative to 100 mass% of resin solid content.

The halogenated vinyl polymer water dispersion is preferably obtained through emulsion polymerization of monomer including at least a halogenated vinyl.

Note that in the present specification, the halogenated vinyl polymer water dispersion may also be referred to simply as a water dispersion. Also note that the resin solid content in the water dispersion of the present embodiment is the total amount of all solid resin contained in the water dispersion and may consist of just the halogenated vinyl polymer or may also include another resin component.

### (Halogenated vinyl polymer)

In the multilayer film of the present invention the halogenated vinyl polymer water dispersion comprises a vinylidene chloride polymer.

A halogenated vinyl polymer includes at least structural units derived from a halogenated vinyl and may further include a monomer that is copolymerizable with the halogenated vinyl.

Note that in the present specification, a monomer that is copolymerizable with the halogenated vinyl may also be referred to as a comonomer.

A halogenated vinyl may be a compound having a structure in which at least one hydrogen atom of a vinyl group has been replaced by a halogen atom. For example, a halogenated vinyl may be a compound in which one hydrogen atom of an ethylene structure has been replaced by a halogen atom or in which a plurality of hydrogen atoms of an ethylene structure have been replaced by halogen atoms. The halogen atom may be fluorine, chlorine, or bromine.

A halogenated vinyl may be a chlorinated monomer such as vinyl chloride, vinylidene chloride, 1,2-dichloroethylene, trichloroethylene, or tetrachloroethylene, a fluorinated monomer such as vinyl fluoride, vinylidene fluoride, trifluoroethylene, or fluoroethylene, a brominated monomer such as vinyl bromide, vinylidene bromide, tribromoethylene, or tetrabromoethylene, or the like, for example. One of these halogenated vinyls may be selected for use, or two or more of these halogenated vinyls may be selected for use. Of these halogenated vinyls, chlorinated monomers excel in terms of ease of polymerization, and vinylidene chloride, in particular, excels in terms of barrier functionality.

Examples of monomers that are copolymerizable with the halogenated vinyl include acrylic acid esters such as methyl acrylate, ethyl acrylate, butyl acrylate, 2-ethylhexyl acrylate, and 2-hydroxyethyl acrylate, methacrylic acid esters such as methyl methacrylate and glycidyl methacrylate, nitriles such as acrylonitrile and methacrylonitrile, and unsaturated carboxylic acids such as acrylic acid, methacrylic acid, itaconic acid, and maleic acid. One of these comonomers may be selected for use, or two or more of these comonomers may be selected for use. Of these comonomers, acrylic acid esters, methacrylic acid esters, methacrylonitrile, acrylonitrile, and acrylic acid are preferable, methyl acrylate, methyl methacrylate, methacrylonitrile, and acrylic acid are more preferable, and methyl acrylate and acrylic acid, in particular, are preferable in terms of flexibility of a coating film.

The halogenated vinyl polymer is preferably a copolymer including 50 mass% or more of structural units derived from a halogenated vinyl (for example, halogenated ethylene) relative to 100 mass% of the halogenated vinyl polymer. Barrier properties and film formability are excellent when the mass ratio of structural units derived from a halogenated vinyl (for example, halogenated ethylene) is within this range. This mass ratio is more preferably 60 mass% or more, even more preferably 70 mass% or more, even more preferably 80 mass% or more, even more preferably 85 mass% or more, and particularly preferably 90 mass% or more. Moreover, from a viewpoint of good film formability being displayed, this mass ratio is preferably 99 mass% or less, more preferably 96 mass% or less, and particularly preferably 94 mass% or less.

In terms of the mass ratio of the halogenated vinyl polymer in the water dispersion of the present embodiment, it is preferable that 20 mass% or more of the halogenated vinyl polymer as solid content is contained from a viewpoint of coatability, with 30 mass% or more being more preferable, 40 mass% or more being even more preferable, 50 mass% or more being even more preferable, and 55 mass% or more being particularly preferable from a viewpoint of even better coatability. Moreover, a mass ratio of 90 mass% or less is preferable, 80 mass% or less is more preferable, 70 mass% or less is even more preferable, and 65 mass% or less is particularly preferable.

The mass ratio of the halogenated vinyl polymer is a value that is measured by mass loss on drying and is measured by the following method. The mass ratio is measured using a SMART System 5 produced by CEM Corporation by dripping 2 g to 4 g of the water dispersion (for example, a latex) onto a glass fiber pad using a dropper, heating the water dispersion with a power of 40%, and then calculating the solid content (mass%) by: (dry mass/mass of water dispersion) × 100.

The halogenated vinyl polymer preferably has a particulate form in the water dispersion of the present embodiment.

The average particle diameter of the halogenated vinyl polymer is preferably 50 nm or more, more preferably 75 nm or more, even more preferably 100 nm or more, and particularly preferably 125 nm or more from a viewpoint of giving excellent surface smoothness when applied in the form of a film. Moreover, the average particle diameter is preferably 300 nm or less, more preferably 250 nm or less, and even more preferably 200 nm or less from a viewpoint of obtaining a good film.

The average particle diameter is a value that is measured by dynamic light scattering and is measured by the following method. The average particle diameter is measured by dispensing 5 cc to 9 cc of the halogenated vinyl polymer water dispersion that has been diluted by a factor of 100 with pure water into a glass cell (Cent Tube STS-2 produced by Maruemu Corporation) and then performing measurement thereof by dynamic light scattering in an FPAR-1000 produced by Otsuka Electronics Co., Ltd.

### (Anionic amphiphilic compound)

In the multilayer film of the present invention the anionic amphiphilic compound is sodium dodecylbenzene sulfonate.

An anionic amphiphilic compound is an amphiphilic compound that is ionized and displays anionic nature upon being dissolved in water. In the present specification, the term anionic refers to an amphiphilic substance in which a hydrophilic group portion thereof is ionized to form a negative ion in water as measured by H-NMR. Moreover, the term non-ionic refers to an amphiphilic substance having a hydroxyl group or ether bond in the structure thereof that does not undergo ion dissociation in water as measured by H-NMR.

The hydrophilicity index of the anionic amphiphilic compound is less than 41.0.

An amphiphilic compound displays a suitable degree of hydrophobicity as a result of having a small hydrophilicity index. Consequently, the amphiphilic compound modifies the surface of the halogenated vinyl polymer (for example, particle surfaces) and has good compatibility with the halogenated vinyl polymer during drying. This causes the amphiphilic compound to be taken into the particles during drying, and enables formation of a coating film without bleeding at the surface. As a result, unevenness of surface tension has a low tendency to arise, and leveling failure has a low tendency to occur during recoating. Moreover, due to low water retention, evaporation of water in a film during drying can be promoted, and the water content in a formed coating film can be reduced, which makes it possible to inhibit foaming during film shaping. A lower hydrophilicity index makes it easier to obtain the effects described above, and thus a hydrophilicity index of 38.0 or less is preferable, and a hydrophilicity index of 34.0 or less is more preferable. Although no specific lower limit is set, the hydrophilicity index is preferably 1.0 or more, more preferably 5.0 or more, even more preferably 10.0 or more, and particularly preferably 20.0 or more when taking into account solubility in water of the amphiphilic compound and affinity thereof with the halogenated vinyl polymer.

The hydrophilicity index can be calculated by the following method. Hydrophilicity index = (Molecular weight of hydrophilic group among chemical structure of amphiphilic compound including salt that is ionized in water)/(Molecular weight of amphiphilic compound including salt that is ionized in water) × 100

Note that the molecular weight is determined by calculation based on constituent atoms of a substance that has been identified through subsequently described H-NMR measurement.

The term hydrophilic group refers to a group of atoms that forms a weak bond with a water molecule through electrostatic interaction or hydrogen bonding and that is stable in water.

The mass ratio of the anionic amphiphilic compound in the water dispersion of the present embodiment is 0.3 mass% or more and 1.5 mass% or less relative to 100 mass% of resin solid content contained in the water dispersion from a viewpoint of excellent recoatability during film coating of the water dispersion and inhibition of foaming during drying, and is preferably 1.0 mass% or less, and particularly preferably 0.7 mass% or less. Moreover, from a viewpoint of achieving good coatability, the mass ratio is preferably 0.4 mass% or more.

### (Non-ionic amphiphilic compound)

The non-ionic amphiphilic compound that can be used in the water dispersion of the present embodiment is an amphiphilic compound having a hydrophilic group such as a hydroxyl group or an ether bond (polyoxyethylene chain, etc.) that does not undergo ion dissociation in water.

Examples of non-ionic amphiphilic compounds include ester-type amphiphilic compounds, ether-type amphiphilic compounds, ester ether-type amphiphilic compounds, alkanol amide-type amphiphilic compounds, alkyl glycosides, and higher alcohols.

Examples of ester-type amphiphilic compounds include glyceryl laurate, glyceryl monostearate, sorbitan fatty acid esters, and sucrose fatty acid esters.

Examples of ether-type amphiphilic compounds include polyoxyethylene alkyl ethers such as pentaethylene glycol monododecyl ether and octaethylene glycol monododecyl ether.

Examples of ester ether-type amphiphilic compounds include polyoxyethylene glycerin fatty acid esters, polyoxyethylene castor oil, polyoxyethylene hydrogenated castor oil, polyoxyethylene sorbitan fatty acid esters, polyoxyethylene sorbitol fatty acid esters, sorbitan fatty acid ester polyethylene hexitan fatty acid esters, and sorbitan fatty acid ester polyethylene glycols.

Examples of alkanol amide-type amphiphilic compounds include lauric diethanolamide, oleic diethanolamide, stearic diethanolamide, and coconut diethanolamide.

Examples of alkyl glycosides include octyl glucoside, decyl glucoside, and lauryl glucoside.

Examples of higher alcohols include cetanol, stearyl alcohol, and oleyl alcohol.

One non-ionic amphiphilic compound may be used individually or two or more non-ionic amphiphilic compounds may be used as a mixture.

The non-ionic amphiphilic compound is preferably ammonium polyoxyethylene alkyl ether sulfate, polyoxyalkylene decyl ether, or polyoxyethylene oleyl ether.

The non-ionic amphiphilic compound preferably has a low critical micelle concentration (also referred to as CMC) as this results in excellent recoatability. The critical micelle concentration is preferably 0.15 mass% or less, more preferably 0.10 mass% or less, and even more preferably 0.06 mass% or less. Moreover, the critical micelle concentration is preferably 0.001 mass% or more, more preferably 0.005 mass% or more, even more preferably 0.01 mass% or more, and particularly preferably 0.03 mass% or more when solubility in water of the amphiphilic compound and affinity thereof with the halogenated vinyl polymer are taken into account.

The critical micelle concentration can be measured by the following method. First, the amphiphilic compound is dissolved in water in concentrations of 0.001 mass%, 0.005 mass%, 0.010 mass%, 0.015 mass%, 0.020 mass%, 0.025 mass%, 0.030 mass%, 0.035 mass%, 0.040 mass%, 0.045 mass% , 0.050 mass%, 0.055 mass%, 0.060 mass%, 0.065 mass%, 0.070 mass%, 0.075 mass%, 0.080 mass%, 0.085 mass%, 0.090 mass%, 0.095 mass%, and 0.1 mass% to prepare aqueous solutions, and then the surface tension of each of these aqueous solutions is measured by the Wilhelmy method. Measurement of surface tension is performed using an automatic surface tensiometer CBVP-Z (produced by Kyowa Interface Science Co., Ltd.) inside a constant temperature chamber of 20°C and 55% RH. When the determined surface tension is plotted for each concentration (mass%), the surface tension decreases with increasing concentration from the low concentration side but becomes a constant value beyond a certain concentration. The concentration (mass%) at this inflection point is taken to be the critical micelle concentration.

In a case in which the water dispersion contains a plurality of non-ionic amphiphilic compounds, a value for the critical micelle concentration of each component among the non-ionic amphiphilic compounds by itself is determined by the method described above, and then an average value calculated from the mass ratio of these components is taken to be the critical micelle concentration.

The mass ratio of the non-ionic amphiphilic compound is preferably more than 0.12 mass%, more preferably 0.15 mass% or more, even more preferably 0.2 mass% or more, even more preferably 0.3 mass% or more, and particularly preferably 0.5 mass% or more relative to 100 mass% of resin solid content in the halogenated vinyl polymer water dispersion from a viewpoint of coatability during film coating. Moreover, the mass ratio is preferably 1.5 mass% or less, and more preferably 1.0 mass% or less from a viewpoint of achieving good coatability.

Qualitative and quantitative analysis of the anionic amphiphilic compound and/or non-ionic amphiphilic compound is performed by the following method and can be performed by either of H-NMR or LC/MS.

### <Analysis by H-NMR>

(A) Take 10 mL of latex and perform freeze drying. Confirm that the residual amount of solvent is 0.1 mass% or less of the total mass. Dissolve 0.5 g of the obtained freeze dried material in 10 mL of tetrahydrofuran. (B) Add 40 mL of methanol dropwise to the tetrahydrofuran solution described above to cause reprecipitation. Next, filter this liquid and remove the precipitate. Concentrate the filtrate to dryness using an evaporator. (C) Add 5 mL of a solvent of 1:1 (volume ratio) tetrahydrofuran/methanol to the concentrated dry material and cause dissolution thereof. (D) Air dry 1 mL of the obtained solution, subsequently dissolve in a solvent of 1:1 deuterated tetrahydrofuran/deuterated methanol to obtain a sample, and then add 10 µL of maleic acid as an internal standard substance to this sample. Measure this sample by H-NMR under the following conditions to perform qualitative and quantitative analysis.

### Measurement conditions of H-NMR

Device: ECS400 produced by JEOL Resonance Co., Ltd.
Observed nucleus (observed frequency): 1H (399.78 MHz)
Pulse program: Single pulse (1H)
Cumulative number: 256 times (1H), 18,000 times (13C)
Lock solvent: THF-d8
Chemical shift standard: THF (1H: 1.80 ppm, 13C: 67.38 ppm)

### <Analysis by LC/MS>

Obtain concentrated dry material that has undergone the pre-treatment in (B) in the same manner as in "Analysis by H-NMR" described above, dilute by a factor of 20 to 100 through addition of methanol, and then perform measurement by LC/MS.

### Measurement conditions of LC/MS

Device: UPLC produced by Waters Corporation/MS Synapt G2 produced by Waters Corporation
Used column: Candenza CD-C18HT (2 mm I.D. × 30 mm) produced by Imtakt Corporation
Column temperature: 40°C
Detection: PDA 200 nm to 400 nm
Flow rate: 0.3 mL/min
Mobile phase: A = 10 mM ammonium acetate aqueous solution, B = acetonitrile
Gradient:

| Time (min) | A% | B% |
|---|---|---|
| 0 min | 98 | 2 |
| 10 min | 0 | 100 |
| 15 min | 0 | 100 |
| 15.1 min | 98 | 2 |
| 20 min | 98 | 2 |
| Injection volume: 2 µL | | |
| Ionization: ESI+, ESI- | | |
| Scan range: m/z 50 to 1,200 | | |

Characteristic m/z values are presented below.

**Table 1**

| Peak | Detected ion (m/z) | Predicted molecular weight | Predicted structure, predicted composition formula | | |
|---|---|---|---|---|---|
| | ESI- | | | | |
| a | 497.17 [M-H]⁻ | 498.18 | 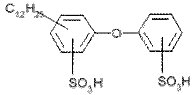 | C24H34O7S2 | 498.17 |
| b | 277.18 [M-H]⁻ | 278.19 | C₁₄H₂₉SO₃H | C14H30O3S | 278.19 |
| c | 219.10 [M-H]⁻ | 220.11 | Unknown | C13H16O3 | 220.11 |
| d | 291.20 [M-H]⁻ | 292.21 | C₁₅H₃₁SO₃H | C15H32O3S | 292.21 |
| e | 341.18 [M-H]⁻ | 342.19 | Unknown | C18H30O4S | 342.19 |
| f | 403.19 [M-H]⁻ | 404.20 | 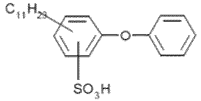 | C23H32O4S | 404.20 |
| g | 417.21 [M-H]⁻ | 418.22 | 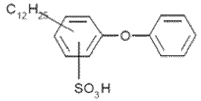 | C24H34O4S | 418.22 |
| h | 665.35 [M-H]⁻ | 666.36 | 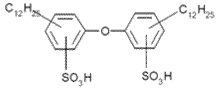 | C36H58O7S2 | 666.36 |
| i | 255.23 [M-H]⁻ | 256.24 | Palmitic acid | C16H32O2 | 256.24 |
| k | 283.26 [M-H]⁻ | 284.27 | Stearic acid | C18H36O2 | 284.27 |

After qualitative analysis, use at least three standard reagents of the detected amphiphilic compound that are of known concentrations, perform measurement thereof under the same conditions, and prepare a calibration curve from the peak area in a mass chromatogram for an m/z value that is characteristic of the target component. Use this calibration curve to quantify the emulsifier concentration in the sample solution. In the case of an unknown material, identify the material with reference to characteristic m/z values observed for various amphiphilic compounds.

### (Sodium pyrophosphate)

The halogenated vinyl polymer water dispersion of the present embodiment may further contain sodium pyrophosphate. The term sodium pyrophosphate refers to a compound represented by a chemical formula Na₄P₂O₇.

Addition of sodium pyrophosphate lowers the viscosity of the halogenated polymer water dispersion. As a result, leveling performance during coating improves. In particular, it is possible to prevent the formation of a ribbing pattern that may arise with a roll coater, bar coater, or the like and that acts as a cause of poor external appearance.

The mass ratio of the sodium pyrophosphate relative to 100 mass% of resin solid content in the halogenated vinyl polymer water dispersion is preferably 0.05 mass% or more, more preferably 0.1 mass% or more, even more preferably 0.18 mass% or more, and most preferably 0.25 mass% or more. Moreover, the upper limit is preferably 10 mass% or less, more preferably 5 mass% or less, and even more preferably 3 mass% or less. Setting this mass ratio as 0.05 mass% or more makes it possible to achieve the effect of lowering viscosity and also the effect of preventing the occurrence of poor external appearance such as a ribbing patterning.

The solvent in the water dispersion of the present embodiment may be just water or may include water and another solvent (for example, a film forming agent such as 2,2,4-trimethyl-1,3-pentanediol, ethylene glycol monobutyl ether, diethylene glycol monobutyl ether acetate, diethylene glycol diethyl ether, ethylene glycol mono-2-ethylhexyl ether, dibutyl phthalate, dioctyl phthalate, propylene glycol n-butyl ether, dipropylene glycol n-butyl ether, tripropylene glycol n-butyl ether, dipropylene glycol methyl ether, tripropylene glycol methyl ether, or methanol, etc.). In a case in which another solvent is included, the other solvent is preferably 20 parts by mass or less relative to 100 parts by mass of resin solid content.

The mass ratio of resin solid content contained in the water dispersion among 100 mass% of the water dispersion of the present embodiment is preferably 20 mass% or more, and more preferably 40 mass% or more. This mass ratio is even more preferably 50 mass% or more.

Moreover, the mass ratio of the halogenated vinyl polymer relative to 100 mass% of resin solid content contained in the water dispersion is preferably 60 mass% or more, more preferably 85 mass% or more, and even more preferably 100 mass%.

### (Characteristics)

The following describes characteristics of the halogenated vinyl polymer water dispersion of the present embodiment.

The surface tension of the water dispersion of the present embodiment is preferably 30 mN/m or more, more preferably 40 mN/m or more, and even more preferably 45 mN/m or more. Measurement of surface tension can be performed by the plate method using an automatic surface tensiometer CBVP-Z (produced by Kyowa Interface Science Co., Ltd.) inside a constant temperature chamber of 20°C and 55% RH.

When the surface tension is within any of the ranges set forth above, the water dispersion can be uniformly applied onto the surface of a base film or the surface of an anchor coating layer on a base film, and a coating film is compactly formed, and thus has a low tendency for defects to form at an interface and displays barrier properties. Moreover, foaming is less likely to occur even during high-temperature shaping.

The following describes film formation failure.

A ribbing pattern is a surface defect having a periodic ridge shape (striated/ribbed shape) that forms along a direction in which a base film is travelling at a coated surface. Leveling failure refers to a phenomenon in which irregularities in a coating film that are formed during application remain and in which the coating film does not become smooth. Orange peel patterning refers a coating film that has a wave-like pattern or surface irregularities resembling the skin of a citrus fruit (orange, etc.) after application and drying.

Foaming during film shaping refers to a phenomenon in which excess water that has been taken into a post-drying coating film is vaporized from inside of the coating film during shaping, leading to the occurrence of foaming and poor external appearance after shaping. The shaping method is not specifically limited and may be vacuum forming, pressure forming, pressing, or the like. Poor external appearance readily occurs when a conventional halogenated vinyl polymer water dispersion is recoated and is subsequently shaped. For example, poor external appearance has readily occurred when a film coated with a thickness such that resin solid content is 40 g/m² or more has been shaped at 130°C or higher. A layer formed through application of the water dispersion of the present embodiment has a low tendency for foaming to occur and also has a low tendency for poor external appearance to arise, and thus makes it possible to obtain a shaped product (for example, a blister pack) having good external appearance even in a case in which pressing is performed at 100°C to 140°C or vacuum forming is performed at 140°C to 180°C, for example.

### [Multilayer film]

A multilayer film of the present embodiment includes a layer obtained by applying a halogenated vinyl polymer water dispersion onto a base film formed of polyvinyl chloride, polyester, polyamide or polypropylene, wherein the halogenated vinyl polymer water dispersion comprises: a vinylidene chloride polymer; and 0.3 mass% or more and 1.5 mass% or less, relative to 100 mass% of resin solid content contained in the water dispersion, of an anionic amphiphilic compound, wherein the anionic amphiphilic compound is sodium dodecylbenzene sulfonate. The base film is preferably a multilayer film formed of polyvinyl chloride, polyester, polyamide or polypropylene.

Note that in the present specification, the layer obtained by applying the halogenated vinyl polymer water dispersion of the present embodiment may also be referred to as a water dispersion layer.

### (Base film)

The base film is made of polyvinyl chloride, polyester, polyamide, or polypropylene. In general, the thickness of a base film (also referred to as a substrate in the present specification) for which a film made of polyvinyl chloride is used is normally 8 µm to 300 µm, though this may vary depending on the base film that is used.

The multilayer film is not limited to being composed of only the water dispersion layer, and a layer of a copolymer, other than a halogenated polymer, that is functionally adjusted with a highly polymerizable monomer as a main component can be combined (for example, stacked) with the water dispersion layer.

When the halogenated vinyl polymer water dispersion of the present embodiment is applied onto the base film that is a constituent of the multilayer film, the water dispersion can be directly applied onto the base film so as to form the water dispersion layer, but it is preferable that the surface of the base film is activated in advance of application in order to improve close adherence of the base film and the water dispersion layer.

The method of activation of the surface of the base film may be a method in which the base film is subjected to corona discharge treatment, plasma discharge treatment, strong acid treatment, electron beam treatment, ultraviolet light treatment, flame treatment, or the like in order to introduce a hydrophilic component such as a hydroxyl group, a carboxyl group, an ester group, an ether bond, an amino group, an imino group, an amide group, or a sulfuric acid group at the surface of the base film.

### (Anchor coating layer)

Another example of a method for improving close adherence of the base film and the water dispersion layer in the multilayer film of the present embodiment is a method in which an anchor coating agent is applied onto the surface of the base film, is dried to form an anchor coating layer, and then the halogenated vinyl polymer water dispersion is applied.

The anchor coating agent that is applied onto the surface of the base film may be an anchor coating agent including one or more selected from a polyacrylic-based resin, a polyurethane-based resin, an isocyanate-based resin, a polyester-based resin, an oxazoline-based resin, and a carboimide-based resin, and is preferably an anchor coating agent selected from a polyacrylic-based resin, a polyurethane-based resin, and an isocyanate-based resin. No specific limitations are placed on the form of the anchor coating agent, and the anchor coating agent may be in the form of a solution that contains an organic solvent, an aqueous solution, or an aqueous emulsion.

Application of the anchor coating agent can be performed by any method that is typically adopted in the field of film coating. For example, gravure coating such as direct gravure coating or reverse gravure coating, roll coating, bar coating, doctor knife coating, or air knife coating may be used.

After application, drying treatment can be performed by a commonly known method such as infrared drying or heated drying by hot-air drying or hot-roll drying at 40°C to 180°C.

The thickness of the anchor coating layer is preferably 0.1 µm to 2 µm for surface smoothness and for retaining close adherence of the base film and the anchor coating layer. In order to increase close adherence with the base film, it is preferable that activation of the base film surface described above is performed, formation of an anchor coating layer is then performed, and then the halogenated vinyl polymer water dispersion is applied.

### (Water dispersion layer)

In the film of the present embodiment, two or more layers of the water dispersion layer described above may be provided. Two or more water dispersion layers may be provided consecutively or may be provided with another layer in-between. Note that in the present specification, a layer formed through recoating of the halogenated vinyl polymer water dispersion is considered to be a single layer. When two or more water dispersion layers are provided consecutively, this means that water dispersion layers having different constituent components are stacked.

The water dispersion layer described above is preferably stacked on at least part of at least one surface of the base film and is more preferably stacked on the entirety of at least one surface of the base film.

In the multilayer film of the present embodiment, the water dispersion layer described above is preferably provided on at least one surface of the base film, and is more preferably provided on both surfaces of the base film.

The thickness of the water dispersion layer is preferably 3 µm or more, more preferably 10 µm or more, even more preferably 20 µm or more, even more preferably 30 µm or more, even more preferably 50 µm or more, even more preferably 60 µm or more, even more preferably 70 µm or more, even more preferably 90 µm or more, and particularly preferably 120 µm or more from a viewpoint of barrier properties. The upper limit is preferably 1,000 µm or less, more preferably 800 µm or less, even more preferably 500 µm or less, even more preferably 300 µm or less, even more preferably 200 µm or less, and particularly preferably 150 µm or less from a viewpoint of film formability and impact resistance, and may be 100 µm or less, or 90 µm or less.

The dry coating film thickness of the water dispersion layer is preferably 3 µm or more, more preferably 10 µm or more, even more preferably 20 µm or more, even more preferably 30 µm or more, even more preferably 50 µm or more, even more preferably 60 µm or more, even more preferably 70 µm or more, even more preferably 90 µm or more, and particularly preferably 120 µm or more from a viewpoint of barrier properties. Although no particular upper limit is set, the thickness is preferably 1,000 µm or less, more preferably 800 µm or less, even more preferably 500 µm or less, even more preferably 300 µm or less, even more preferably 200 µm or less, even more preferably 150 µm or less, and particularly preferably 100 µm or less from a viewpoint of film formability and impact resistance, and may be 90 µm or less.

Although a larger thickness provides the film with better barrier properties against water vapor and oxygen, foaming is more likely to occur because of uneven heating during shaping of the film by blister shaping or the like. Moreover, the blister shaped product becomes harder, which makes it difficult to press out a medication, and also suffers from deepening of slight yellow coloration and loss of external appearance. In the case of the halogenated vinyl polymer water dispersion of the present embodiment, the trade-offs described above have a low tendency to occur as a result of inclusion of a specific amphiphilic compound, and thus it is possible to obtain a film and shaped product excelling in terms of foaming, ease of pressing out, and external appearance with a thickness that gives suitable barrier properties.

The thickness of the dry coating film described above is measured by the following method.

The multilayer film obtained through application of the water dispersion of the present embodiment is cleaved using a microtome (RM2245 produced by Leica), is then observed using an electron microscope (TM4000plus produced by Hitachi, Ltd.), and the thickness of the dry coating film of the water dispersion layer is measured.

The post-drying coating film mass of the halogenated vinyl polymer in the water dispersion layer is preferably 5 g/m² or more, more preferably 40 g/m² or more, even more preferably 50 g/m² or more, further preferably 60 g/m² or more, further preferably 70 g/m² or more, particularly preferably 80 g/m² or more, and especially preferably 90 g/m² or more from a viewpoint of barrier properties. The upper limit is preferably 1,600 g/m² or less, more preferably 1,200 g/m² or less, even more preferably 800 g/m² or less, particularly preferably 500 g/m² or less, especially preferably 300 g/m² or less, and extremely preferably 160 g/m² or less from a viewpoint of film formability and impact resistance.

In a case in which the water dispersion layer described above is provided in plurality, the thickness and coating film mass of each layer may be the same or different.

The water content of the multilayer film of the present embodiment is preferably 3 mass% or less, more preferably 2 mass% or less, even more preferably 1 mass% or less, even more preferably 0.5 mass% or less, even more preferably 0.3 mass% or less, even more preferably 0.2 mass% or less, and particularly preferably 0.1 mass% or less. A lower water content is preferable because this reduces the likelihood of foaming occurring during heated shaping of the multilayer film obtained through application of the water dispersion of the present embodiment and results in the film having excellent transparency. Although a lower limit is not set for the water content since the effects described above improve as the water content decreases, a lower limit of 0.01 mass% or more is preferable as a realistic range. The water content referred to herein is a moisture value measured by the Karl Fischer method.

The water content is measured by the following method.

Using a measurement unit MKC-710M, a water vaporizer ADP-611, and a control unit MCU-710 produced by Kyoto Electronics Manufacturing Co., Ltd., at least 30 minutes of purging is performed by causing nitrogen to flow into the ADP-611 at a flow rate of 200 mL/min, 0.1000 g ± 0.05 g of the multilayer film coated with the halogenated vinyl polymer is then placed on a sample board, 3 minutes of purging is performed at 180°C, and then measurement is performed at 160°C. The sample is replaced in order to repeat these operations three times, and an average value of the three measurements is taken to be the water content.

The relative crystallinity (CI value) of the water dispersion layer as measured by a Fourier transform infrared spectrophotometer (total reflection measurement method) is preferably 1.1 or more, more preferably 1.2 or more, even more preferably 1.3 or more, even more preferably 1.4 or more, even more preferably 1.5 or more, even more preferably 1.6 or more, even more preferably 1.7 or more, and particularly preferably 1.8 or more. The strength of the water dispersion layer in the multilayer film increases as this value increases, and, as a result, it becomes harder for a trace amount of water contained in the multilayer film to swell during heated shaping, it becomes harder for visible bubbles to grow, and excellent external appearance is achieved. Although an upper limit is not specifically set for this value because the effects described above improve as the value increases, an upper limit of 3.0 or less is preferable, and an upper limit of 2.0 or less is more preferable as a realistic range.

The relative crystallinity (CI value) is measured by the following method.

An IRAffinity-1S produced by Shimadzu Corporation is set to a resolution of 4 cm⁻¹ and is used to irradiate the coated surface of vinylidene chloride with infrared light and perform measurement by the ATR method.

Chlorine is known to cause C-C dipole moment strengthening through conformation change as crystallization progresses, resulting in stronger absorption at 1046 cm⁻¹. This is exploited by joining from 800 cm⁻¹ to 1320 cm⁻¹ on the IR chart in a linear form and then taking a ratio of peak heights determined by 1046 cm⁻¹ (C-C bonds of polyvinylidene chloride)/1070 cm⁻¹ (CH bonds of polyvinylidene chloride skeleton) to be the relative crystallinity (CI value).

The method by which the halogenated vinyl polymer water dispersion is applied onto the base film to form the water dispersion layer can be a method that is typically adopted in the field of film coating. Examples of application methods that may suitably be used include gravure coating such as direct gravure coating, roll coating such as two-roll beat coating and bottom-feed three-roll reverse coating, doctor knife coating, air knife coating, die coating, bar coating, dip coating, and spray coating. In terms of good productivity and enabling simple formation of the water dispersion layer, it is preferable to adopt gravure coating, roll coating, or air knife coating, and more preferable to adopt gravure coating. The amount of the water dispersion that is applied during application is not specifically limited and varies depending on the desired thickness of the water dispersion layer. A desired water dispersion layer can be formed by performing application and drying once or repeatedly a plurality of times. By setting the applied amount such that drying is not insufficient and such that solvent does not remain, it is possible to cause effective display of film properties. Examples of drying methods that can be used include, but are not specifically limited to, a method using natural drying, a method of drying in an oven set to a specific temperature, and a method of drying using a dryer accompanying a coater, an arch dryer, a flotation dryer, a drum dryer or an infrared dryer. The drying conditions can be selected as appropriate depending on the drying method, but in the case of drying in an oven, for example, drying is preferably performed for approximately 1 second to 5 minutes at a temperature of 60°C to 200°C.

The water dispersion layer may contain 0.001 parts by mass to 5 parts by mass of a wax relative to 100 parts by mass of the halogenated vinyl polymer. This amount is preferably 0.005 parts by mass to 3 parts by mass, and more preferably 0.01 parts by mass to 1 part by mass in terms of balance of crystallization rate and expression of barrier properties. Just one type of wax may be included, or a wax composition formed of two or more types of waxes may be included. In a case in which a wax (or wax composition) is included, the wax (or wax composition) can be added to the halogenated vinyl polymer water dispersion prior to formation of the water dispersion layer. The addition of a wax gives effects of improving sliding properties and preventing blocking. The type of wax is not specifically limited and can be a natural or synthetic wax. For example, polyolefin wax, paraffin wax, carnauba wax, beeswax, Chinese wax, ozokerite, montanic acid wax, or an esterified product of any thereof can be used individually or in a composition in which it is contained as a main component. Of these waxes, it is preferable to use polyolefin wax. Since the addition of a wax to a vinylidene chloride copolymer facilitates progression of crystallization and thereby causes initial physical properties to change, the mass ratio of the wax is preferably adjusted in accordance with the form of the water dispersion layer in the film.

In a case in which the water dispersion layer is provided as a layer other than a surface layer, it is preferable that the water dispersion layer is a layer that does not contain a wax. In a case in which a wax is not included, hardening of the coating film proceeds gradually, and the film has good impact resistance.

The multilayer film of the present embodiment can be used as a blister pack and, in particular, is preferably used as a blister pack for a medication.

When the multilayer film is used as a film for a blister pack, a halogenated polymer having barrier properties, other than that according to the present disclosure, may be used in combination therewith.

In the multilayer film of the present embodiment, a general-purpose resin film for shape retention may be laminated between any of the base film, the anchor coating layer, and the water dispersion layer. The laminated film is not specifically limited and may, for example, be polyethylene, polypropylene, or polyester having a thickness of 1 µm to 100 µm, for example.

### (Characteristics)

The following describes characteristics of the multilayer film of the present embodiment.

The oxygen transmission rate of the multilayer film of the present embodiment is, for example, preferably less than 2.3 cm³/m².day under conditions of 23°C and 0.1 MPa air pressure in the case of a film that is obtained by coating a stretched polyvinyl chloride film of 250 µm in thickness with the halogenated vinyl polymer water dispersion.

The water vapor transmission rate of the multilayer film of the present embodiment is, for example, preferably less than 2.0 g/m².day under conditions of 38°C and 100% humidity in the case of a film that is obtained by coating a stretched polyvinyl chloride film of 250 µm in thickness with the halogenated vinyl polymer water dispersion.

### EXAMPLES

The following provides a more specific description of the present disclosure through examples. However, the present disclosure is not limited to these examples. Note that when referring simply to "parts" or "%" in the examples and comparisons, this represents "parts by mass" or "mass%" unless clearly indicated otherwise. Also note that evaluations of physical properties were performed by methods described further below.

### (Example 1 - Preparation Example)

A pressure-resistant reactor having a glass lining was charged with 57 parts of pure water, 0.03 parts of sodium D-araboascorbate, and 0.4 parts of sodium alkyl diphenyl ether sulfonate, with the final additive amount of monomer taken to be 100 parts. The contents of the pressure-resistant reactor were subjected to degassing under stirring and were then held at a temperature of 45°C. A feedstock monomer mixture having a composition mass ratio of VDC/MA/AA = 90.4/9.5/0.1 was prepared in a separate vessel. A single addition of 20 parts of the feedstock monomer mixture was performed with respect to the pressure-resistant reactor, and polymerization was performed until the internal pressure dropped. Next, continuous metered injection of the remaining 80 parts of the monomer mixture was performed. Concurrently thereto, continuous metered injection was performed for an initiator having 0.028 parts of t-butyl hydroperoxide dissolved in 3.75 parts of pure water, a reductant having 0.012 parts of sodium D-araboascorbate dissolved in 3.0 parts of pure water, and an emulsifier having 0.5 parts of sodium alkyl diphenyl ether disulfonate dissolved in 3.8 parts of pure water. During the above, the contents were held at 45°C under stirring, and the reaction was caused to proceed until the internal pressure sufficiently dropped.

The polymerization yield was 99.8%. Since the polymerization yield was almost 100%, the copolymer composition was almost equal to the charging ratio. The particle diameter of a vinylidene chloride-based copolymerized resin latex obtained in this manner was 169 nm. The obtained latex was subjected to steam stripping in order to remove unreacted monomer and was then adjusted to a pH of 3.0 using 12% sodium pyrophosphate. Thereafter, pure water was used to adjust the solid content to 50% to 60%, and then sodium dodecylbenzenesulfonate 18% aqueous solution was used to add 0.6 parts of sodium dodecylbenzenesulfonate relative to resin solid content in the latex.

### (Example 2 - a reference example)

A halogenated water dispersion was produced by the same method as in Example 1 with the exception that sodium dodecylbenzenesulfonate 18% aqueous solution was changed to dialkyl sulfosuccinate salt 18% aqueous solution.

### (Example 3 - a reference example)

A halogenated water dispersion was produced by the same method as in Example 1 with the exception that sodium dodecylbenzenesulfonate 18% aqueous solution was changed to an 18% aqueous solution prepared by mixing sodium alkylsulfonate and dialkyl sulfosuccinate salt in a mass ratio of 79:29.

### (Example 4 - a reference example)

A halogenated water dispersion was produced by the same method as in Example 1 with the exception that sodium dodecylbenzenesulfonate 18% aqueous solution was changed to sodium palmitate 18% aqueous solution.

### (Reference Example 1)

A halogenated water dispersion was produced by the same method as in Example 1 with the exception that sodium dodecylbenzenesulfonate 18% aqueous solution was changed to ammonium polyoxyethylene alkyl ether sulfate 18% aqueous solution.

### (Reference Example 2)

A halogenated water dispersion was produced by the same method as in Example 1 with the exception that sodium dodecylbenzenesulfonate 18% aqueous solution was changed to polyoxyalkylene decyl ether 18% aqueous solution.

### (Reference Example 3)

A halogenated water dispersion was produced by the same method as in Example 1 with the exception that sodium dodecylbenzenesulfonate 18% aqueous solution was changed to polyoxyalkylene decyl ether 18% aqueous solution having a different critical micelle concentration to in Reference Example 2.

### (Reference Example 4)

A halogenated water dispersion was produced by the same method as in Example 1 with the exception that sodium dodecylbenzenesulfonate 18% aqueous solution was changed to polyoxyethylene oleyl ether 18% aqueous solution.

### (Comparative Example 1)

A halogenated water dispersion was produced by the same method as in Example 1 with the exception that sodium dodecylbenzenesulfonate 18% aqueous solution was changed to sodium alkylsulfonate 18% aqueous solution.

### (Comparative Example 2)

A halogenated water dispersion was produced by the same method as in Example 1 with the exception that sodium dodecylbenzenesulfonate 18% aqueous solution was changed to sodium alkyl diphenyl ether disulfonate 18% aqueous solution.

### (Example 5 - a reference example)

A halogenated water dispersion was produced by the same method as in Example 1 with the exception that the additive amount of sodium dodecylbenzenesulfonate 18% aqueous solution was changed to 0.05 parts.

### (Example 6)

A halogenated water dispersion was produced by the same method as in Example 1 with the exception that the additive amount of sodium dodecylbenzenesulfonate 18% aqueous solution was changed to 0.3 parts.

### (Example 7 - a reference example)

A halogenated water dispersion was produced by the same method as in Example 1 with the exception that the additive amount of sodium dodecylbenzenesulfonate 18% aqueous solution was changed to 2.4 parts.

### (Comparative Example 3)

A halogenated water dispersion was produced by the same method as in Example 1 with the exception that the additive amount of sodium dodecylbenzenesulfonate 18% aqueous solution was changed to 2.5 parts.

### (Reference Example 5)

A halogenated water dispersion was produced by the same method as in Example 1 with the exception that sodium dodecylbenzenesulfonate 18% aqueous solution was changed to polyoxyethylene oleyl ether 18% aqueous solution, and the amount thereof was changed to 0.13 parts.

### (Reference Example 6)

A halogenated water dispersion was produced by the same method as in Example 1 with the exception that sodium dodecylbenzenesulfonate 18% aqueous solution was changed to polyoxyethylene oleyl ether 18% aqueous solution, and the amount thereof was changed to 0.3 parts.

### (Reference Example 7)

A halogenated water dispersion was produced by the same method as in Example 1 with the exception that sodium dodecylbenzenesulfonate 18% aqueous solution was changed to polyoxyethylene oleyl ether 18% aqueous solution, and the amount thereof was changed to 1.5 parts.

### (Comparative Example 4)

A halogenated water dispersion was produced by the same method as in Example 1 with the exception that sodium dodecylbenzenesulfonate 18% aqueous solution was changed to polyoxyethylene oleyl ether 18% aqueous solution, and the amount thereof was changed to 0.12 parts.

### (Example 8)

A #4 Mayer rod was used to apply an acrylic urethane-based anchor coating agent Emurdur 381 A (produced by BASF Corporation) as a primer onto a stretched polyvinyl chloride film of 250 µm in thickness that had undergone corona discharge treatment such that the post-drying coating film weight was 2 g/m², and then 15 seconds of drying treatment was performed at 85°C in a hot-air circulation dryer. The vinylidene chloride-based copolymerized resin latex obtained in Example 1 was applied onto this film by a Mayer rod such as to have a post-drying coating film thickness of 3 µm and was subjected to 15 seconds of drying treatment with drying conditions of a temperature of 85°C and an air speed of 4 m/s in a hot-air circulation dryer.

### (Example 9)

A specimen was produced by the same method as in Example 8 with the exception that application was performed such as to give a post-drying coating film thickness of 10 µm.

### (Example 10)

A specimen was produced by the same method as in Example 8 with the exception that recoating was performed such as to give a post-drying coating film thickness of 20 µm.

### (Example 11)

A specimen was produced by the same method as in Example 8 with the exception that recoating was performed such as to give a post-drying coating film thickness of 30 µm.

### (Example 12)

A specimen was produced by the same method as in Example 8 with the exception that recoating was performed such as to give a post-drying coating film thickness of 60 µm.

### (Example 13)

A specimen was produced by the same method as in Example 8 with the exception that recoating was performed such as to give a post-drying coating film thickness of 100 µm.

### (Example 14)

A specimen was produced by the same method as in Example 8 with the exception that application was performed such as to give a post-drying coating film thickness of 1 µm.

### (Comparative Example 5)

A stretched polyvinyl chloride film of 250 µm was used by itself without being coated by a vinylidene chloride-based copolymerized resin latex.

### (Example 15- Preparation Example)

Production was performed by the same method as in Example 1 with the exception that polymerization was performed such that VDC/MAN/MMA/AA = 91.5/5.2/2.4/0.9.

### (Example 16)

A specimen was produced by the same method as in Example 8 with the exception that recoating was performed such as to give a post-drying coating film thickness of 70 µm.

### (Example 17)

A specimen was produced by the same method as in Example 8 with the exception that recoating was performed such as to give a post-drying coating film thickness of 90 µm.

### (Example 18)

A specimen was produced by the same method as in Example 8 with the exception that recoating was performed such as to give a post-drying coating film thickness of 120 µm.

### (Example 19)

A specimen was produced by the same method as in Example 8 with the exception that recoating was performed such as to give a post-drying coating film thickness of 150 µm.

### (Example 20)

A specimen was produced by the same method as in Example 8 with the exception that recoating was performed such as to give a post-drying coating film thickness of 180 µm.

### (Example 21)

A vinyl chloride sheet coated with a vinylidene chloride-based copolymer that was produced by the same method as in Example 12 was left at rest for 7 hours inside a constant temperature chamber of 40°C and 50% RH, and was then used as a specimen.

### (Example 22)

A vinyl chloride sheet coated with a vinylidene chloride-based copolymer that was produced by the same method as in Example 12 was left at rest for 14 hours inside a constant temperature chamber of 40°C and 50% RH, and was then used as a specimen.

### (Example 23)

A vinyl chloride sheet coated with a vinylidene chloride-based copolymer that was produced by the same method as in Example 12 was left at rest for 17 hours inside a constant temperature chamber of 40°C and 50% RH, and was then used as a specimen.

### (Example 24)

A vinyl chloride sheet coated with a vinylidene chloride-based copolymer that was produced by the same method as in Example 12 was left at rest for 26 hours inside a constant temperature chamber of 40°C and 50% RH, and was then used as a specimen.

### (Example 25)

A specimen was produced by the same method as in Example 12 with the exception that the drying temperature was set as 95°C.

### (Example 26)

A specimen was produced by the same method as in Example 12 with the exception that the drying temperature was set as 90°C.

### (Example 27)

A specimen was produced by the same method as in Example 12 with the exception that the drying temperature was set as 80°C.

Samples obtained in the examples, reference examples, and comparative examples were used to perform the following evaluations. The results are shown in Tables 2 to 8.

### (1) Foaming properties

A #4 Mayer rod was used to apply an acrylic urethane-based anchor coating agent Emurdur 381 A (produced by BASF Corporation) as a primer onto a stretched polyvinyl chloride film of 250 µm in thickness that had undergone corona discharge treatment such that the post-drying coating film weight was 2 g/m², and then 15 seconds of drying treatment was performed at 85°C in a hot-air circulation dryer. A vinylidene chloride-based copolymerized resin latex obtained in an example, reference example, or comparative example was applied onto this film by a Mayer rod such as to have a post-drying coating film weight for one application of 10 g/m² to 15 g/m², was subjected to 60 seconds of drying treatment with a temperature of 60°C and an air speed of 6 m/s by a hot-air circulator inside a constant temperature and constant humidity tank of 20°C and 55% RH, and was recoated until the post-drying coating film weight was 80 g/m² to 100 g/m².

The film was cut out as a square shape of 9 cm-square using scissors and placed at rest on a metal tray that was loaded into a vacuum dryer DP32 (produced by Yamato Scientific Co., Ltd.) adjusted to 170°C. The film was then heated for 3 minutes and was vacuum heated at a degree of vacuum of -9.3 kPa or more using a vacuum pump PX-51 (produced by Yamato Scientific Co., Ltd.) in a state in which the temperature was held at 170°C. The film that had been vacuum heated was removed and then visually judged. The evaluation standard was set as the following four levels using a film coated with Comparative Example 1 under the same conditions as a comparison.
Double circles (Excellent): Foaming cannot be confirmed by the naked eye at the film surface for all samples
Circle (Very good): Foaming can be confirmed by the naked eye for some samples
Triangle (Good): For every sample, foaming occurs such that the number of bubbles that can be confirmed by the naked eye is 1 to 150 when the number of bubbles per 56.3 cm² of the film surface is measured, but not problematic for practical use
Cross (Poor): For every sample, foaming occurs such that the number of bubbles that can be confirmed by the naked eye is 150 or more when the number of bubbles per 56.3 cm² of the film surface is measured, and not preferable for practical use

### (2) Coatability

A #4 Mayer rod was used to apply an acrylic urethane-based anchor coating agent Emurdur 381 A (produced by BASF Corporation) as a primer onto a stretched polyvinyl chloride film of 250 µm in thickness that had undergone corona discharge treatment such that the post-drying coating film weight was 2 g/m², and then 15 seconds of drying treatment was performed at 85°C and 4 m/s in a hot-air circulation dryer. A vinylidene chloride-based copolymerized resin latex obtained in an example, reference example, or comparative example was applied onto this film by a Mayer rod such as to have a post-drying coating film weight for one application of 10 g/m² to 15 g/m², and was subjected to 60 seconds of drying treatment with a temperature of 60°C and an air speed of 9 m/s by a hot-air circulator inside a constant temperature and constant humidity tank of 20°C and 55% RH so as to produce a coated film.

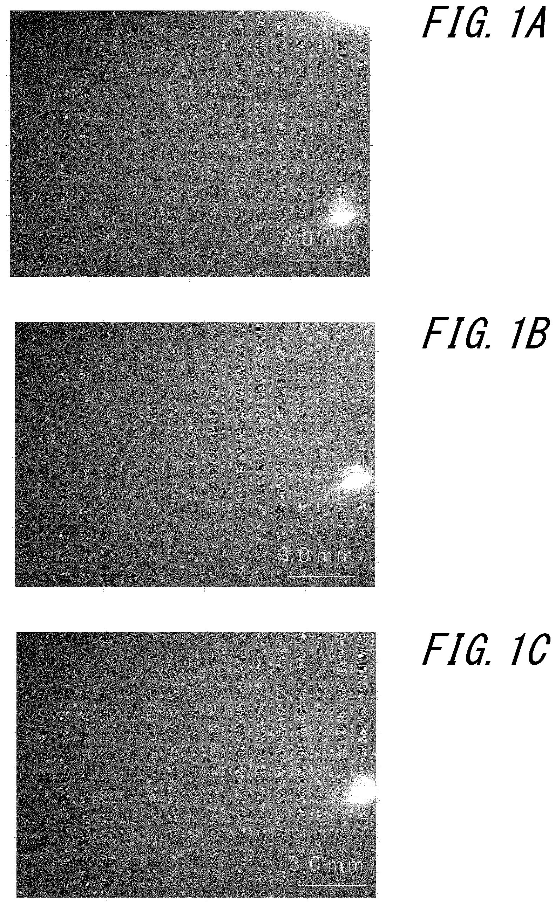

This film was visually judged. The evaluation standard was set as the following four levels using a film coated with Comparative Example 1 under the same conditions as a comparison. The evaluation standard for coatability is illustrated in FIG. 1.
Double circles (Excellent): Coated surface is uniform without any defects at all
Circle (Very good): Coated surface is almost uniform but slight occurrence of picture frame effect can be visually confirmed
Triangle (Good): Ribbing pattern defect can be visually confirmed at the coated surface and slight occurrence of picture frame effect can be visually confirmed, but not problematic for practical use
Cross (Poor): Ribbing pattern defect can be visually confirmed at the coated surface, clear occurrence of picture frame effect is visually observed, and not preferable for practical use

### (3) Recoatability

A #4 Mayer rod was used to apply an acrylic urethane-based anchor coating agent Emurdur 381 A (produced by BASF Corporation) as a primer onto a stretched polyvinyl chloride film of 250 µm in thickness that had undergone corona discharge treatment such that the post-drying coating film weight was 2 g/m², and then 15 seconds of drying treatment was performed at 85°C in a hot-air circulation dryer. A vinylidene chloride-based copolymerized resin latex obtained in an example, reference example, or comparative example was applied onto this film by a Mayer rod such as to have a post-drying coating film weight for one application of 10 g/m² to 15 g/m², was subjected to 60 seconds of drying treatment with a temperature of 60°C and an air speed of 6 m/s by a hot-air circulator inside a constant temperature and constant humidity tank of 20°C and 55% RH, and was recoated until the post-drying coating film weight was 80 g/m² to 100 g/m².

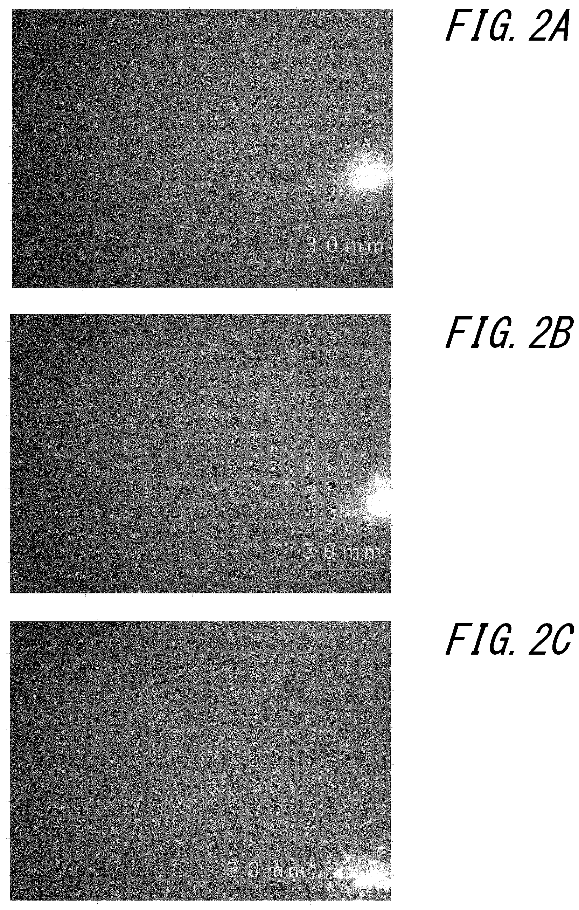

This film was visually judged. The evaluation standard was set as the following four levels using a film coated with Comparative Example 1 under the same conditions as a comparison. The evaluation standard for recoatability is illustrated in FIG. 2.
Double circles (Excellent): Coated surface is uniform without any defects at all
Circle (Very good): Slight non-uniformity of coated surface
Triangle (Good): Orange peel or ribbing phenomenon occurs and transparency deteriorates, but not problematic for practical use
Cross (Poor): Orange peel or ribbing phenomenon occurs, lacking in transparency, and not preferable for practical use

### (4) Barrier properties

A #4 Mayer rod was used to apply an acrylic urethane-based anchor coating agent Emurdur 381 A (produced by BASF Corporation) as a primer onto a stretched polyvinyl chloride film of 250 µm in thickness that had undergone corona discharge treatment such that the post-drying coating film weight was 2 g/m², and then 15 seconds of drying treatment was performed at 85°C in a hot-air circulation dryer. A vinylidene chloride-based copolymerized resin latex obtained in an example, reference example, or comparative example was applied onto this film by a Mayer rod (note that Mayer rods of different numbers were used) such as to have a post-drying coating film weight for one application of 3 g/m² to 15 g/m², was subjected to 15 seconds of drying treatment under drying conditions of a temperature of 85°C and an air speed of 4 m/s in a hot-air circulation dryer, and was recoated until the post-drying coating film weight was 3 g/m² to 150 g/m².

The oxygen transmission rate of the film was measured as an evaluation of barrier properties. After performing sufficient moisture control of the coated film at room temperature with a relative humidity of 100%, an OX-TRAN 100 (produced by Modern Control Inc.) was used to measure the oxygen transmission rate at 23°C and 80% relative humidity.

The water vapor transmission rate of the film was also measured as an evaluation of barrier properties. After performing sufficient moisture control of the coated film at room temperature with a relative humidity of 100%, a PERMATRAN-W 3/31 (produced by Modern Control Inc.) was used to measure the water vapor transmission rate at 38°C and 100% relative humidity.

In addition, a large rotary microtome OSK 97LF506 (produced by Ogawa Seiki Co., Ltd.) was used to cut the coated film and produce a slice, and then a microscope KH-7700 (produced by Hirox) was used to observe a cross-section of the slice and measure the film thickness.

### (5) Critical micelle concentration

An amphiphilic compound was dissolved in water in concentrations of 0.001 mass%, 0.005 mass%, 0.010 mass%, 0.015 mass%, 0.020 mass%, 0.025 mass%, 0.030 mass%, 0.035 mass%, 0.040 mass%, 0.045 mass% , 0.050 mass%, 0.055 mass%, 0.060 mass%, 0.065 mass%, 0.070 mass%, 0.075 mass%, 0.080 mass%, 0.085 mass%, 0.090 mass%, 0.095 mass%, and 0.1 mass% to prepare aqueous solutions, and then the surface tension of each of these aqueous solutions was measured by the Wilhelmy method. Measurement of surface tension was performed using an automatic surface tensiometer CBVP-Z (produced by Kyowa Interface Science Co., Ltd.) inside a constant temperature chamber of 20°C and 55% RH. When the determined surface tension was plotted for each concentration (mass%), the surface tension decreased with increasing concentration from the low concentration side but became a constant value beyond a certain concentration. The concentration (mass%) at this inflection point was taken to be the critical micelle concentration.

### (6) Surface tension

Measurement of surface tension was performed by the plate method using an automatic surface tensiometer CBVP-Z (produced by Kyowa Interface Science Co., Ltd.) inside a constant temperature chamber of 20°C and 55% RH.

### (7) Film thickness

A multilayer film obtained in an example or comparative example was cleaved using a microtome (RM2245 produced by Leica), was then observed using an electron microscope (TM4000plus produced by Hitachi, Ltd.), and the thickness of the dry coating film of the water dispersion layer was measured.

### (8) Water content

Using a measurement unit MKC-710M, a water vaporizer ADP-611, and a control unit MCU-710 produced by Kyoto Electronics Manufacturing Co., Ltd., at least 30 minutes of purging was performed by causing nitrogen to flow into the ADP-611 at a flow rate of 200 mL/min, 0.1000 g ± 0.05 g of a multilayer film coated with a halogenated vinyl polymer was then placed on a sample board, 3 minutes of purging was performed at 180°C, and then measurement was performed at 160°C. The sample was replaced in order to repeat these operations three times, and an average value of the three measurements was taken to be the water content.

### (9) Relative crystallinity

An IRAffinity-1S produced by Shimadzu Corporation was set to a resolution of 4 cm⁻¹ and was used to irradiate a coated surface of vinylidene chloride with infrared light and perform measurement by the ATR method.

Chlorine is known to cause C-C dipole moment strengthening through conformation change as crystallization progresses, resulting in stronger absorption at 1046 cm⁻¹. This was exploited by joining from 800 cm⁻¹ to 1320 cm⁻¹ on the IR chart in a linear form and then taking a ratio of peak heights determined by 1046 cm⁻¹ (C-C bonds of polyvinylidene chloride)/1070 cm⁻¹ (CH bonds of polyvinylidene chloride skeleton) to be the relative crystallinity (CI value).

Examples 2, 3 and 4 in Table 2 are Reference Examples not according to the invention.

**Table 2**

| | | Example 1 | Example 2 | Example 3 | Example 4 | Reference Example 1 | Reference Example 2 | Reference Example 3 | Reference Example 4 | Comparative Example 1 | Comparative Example 2 |
|---|---|---|---|---|---|---|---|---|---|---|---|
| Amphiphilic compound | - | Sodium dodecylbenzene sulfonate | Dialkyl sulfosuccinate salt | Mixture of sodium alkyl sulfonate and dialkyl sulfosuccinat e salt | Sodium palmitate | Ammonium polyoxyethylene alkyl ether sulfate | Polyoxyalkylene decyl ether | Polyoxyalkylene decyl ether | Polyoxyethylene oleyl ether | Sodium alkylsulfonate | Sodium alkyl diphenyl disulfonate |
| Amount | Mass% | 0.6 | 0.6 | 0.6 | 0.6 | 0.6 | 0.6 | 0.6 | 0.6 | 0.6 | 0.6 |
| Classification (anionic/non-ionic) | - | Anionic | Anionic | Anionic | Anionic | Non-ionic | Non-ionic | Non-ionic | Non-ionic | Anionic | Anionic |
| Hydrophilicity index | - | 33.1 | 37.6 | 40.5 | 24 | - | - | - | - | 41 | 43.8 |
| Critical micelle concentration | Mass% | 0.066 | 0.003 | 0.003 | 0.89 | 0.13 | 0.1 | 0.055 | 0.003 | 0.03 | 0.68 |
| Surface tension | mN/m | 42.7 | 38.5 | 39.5 | 48 | 46.4 | 43.2 | 45.5 | 46.4 | 40.6 | 46.9 |
| Foaming properties | - | ○ | ○ | Δ | Δ | ○ | ○ | ○ | ○ | Δ | Δ |
| Coatability | - | ○ | ○ | ○ | Δ | ○ | ○ | ○ | ○ | ○ | Δ |
| Recoatability | - | ⊚ | ○ | Δ | Δ | ○ | ○ | ⊚ | ⊚ | × | × |

Examples 5 and 7 in Table 3 are Reference Examples not according to the invention.

**Table 3**

| | | Example 5 | Example 6 | Example 1 | Example 7 | Comparative Example 3 |
|---|---|---|---|---|---|---|
| Amphiphilic compound | - | Sodium dodecylbenzene sulfonate | Sodium dodecylbenzene sulfonate | Sodium dodecylbenzene sulfonate | Sodium dodecylbenzene sulfonate | Sodium dodecylbenzene sulfonate |
| Amount | Mass% | 0.05 | 0.3 | 0.6 | 2.4 | 2.5 |
| Foaming properties | - | ⊚ | ○ | ○ | Δ | × |
| Coatability | - | Δ | ○ | ○ | Δ | Δ |
| Recoatability | - | ○ | ⊚ | ⊚ | Δ | × |

**Table 4**

| | | Reference Example 5 | Reference Example 6 | Reference Example 4 | Reference Example 7 | Comparative Example 4 |
|---|---|---|---|---|---|---|
| Amphiphilic compound | - | Polyoxyethylene oleyl ether | Polyoxyethylene oleyl ether | Polyoxyethylene oleyl ether | Polyoxyethylene oleyl ether | Polyoxyethylene oleyl ether |
| Amount | Mass% | 0.13 | 0.3 | 0.6 | 1.5 | 0.12 |
| Foaming properties | - | ○ | ○ | ○ | ○ | ○ |
| Coatability | - | Δ | ○ | ○ | ○ | × |
| Recoatability | - | ○ | ○ | ⊚ | ○ | ○ |

**Table 5**

| | | Example 8 | Example 9 | Example 10 | Example 11 | Example 12 | Example 13 | Example 14 | Example 16 | Example 17 | Example 18 | Example 19 | Example 20 | Comparative Example 5 |
|---|---|---|---|---|---|---|---|---|---|---|---|---|---|---|
| Thickness | µm | 3 | 10 | 20 | 30 | 60 | 100 | 1 | 70 | 90 | 120 | 150 | 180 | - |
| Water vapor transmission rate | g/m²·day | 1.8 | 1.5 | 1.1 | 0.8 | 0.3 | 0.1 | 2.0 | 0.2 | 0.2 | 0.1 | 0.04 | 0.02 | 8.0 |
| Oxygen transmission rate | cc/m²/ 0.1 atm/day | 2.2 | 1.8 | 1.4 | 1.0 | 0.6 | 0.2 | 2.3 | 0.2 | 0.2 | 0.1 | 0.05 | 0.03 | 3.4 |
| Foaming properties | - | ⊚ | ⊚ | ⊚ | ⊚ | ○ | ○ | ⊚ | ○ | ○ | ○ | Δ | Δ | ⊚ |

**Table 6**

| | Example 1 | Example 15 |
|---|---|---|
| Foaming properties | ○ | ○ |

**Table 7**

| | | Example 21 | Example 22 | Example 23 | Example 24 |
|---|---|---|---|---|---|
| CI value | - | 1.2 | 1.2 | 1.3 | 1.5 |
| Water content | Mass% | 0.5 | 0.5 | 0.5 | 0.5 |
| Foaming properties | - | ○ | ○ | ⊚ | ⊚ |

**Table 8**

| | | Example 25 | Example 26 | Example 12 | Example 27 |
|---|---|---|---|---|---|
| Drying temperature | °C | 95 | 90 | 85 | 80 |
| Water content | Mass% | 0.2 | 0.3 | 0.5 | 1 |
| CI value | - | 1.2 | 1.2 | 1.1 | 1.1 |
| Foaming properties | - | ⊚ | ⊚ | ○ | Δ |

### INDUSTRIAL APPLICABILITY

An excellent vinylidene chloride-based latex produced according to the present disclosure has excellent barrier properties against water vapor and oxygen and does not experience loss of external appearance even upon thick coating, and thus can suitably be used as a coating material for application onto various materials such as films for food or medication packaging, paper, general household goods, and so forth.

## Claims

1. A multilayer film comprising a layer obtained by applying a halogenated vinyl polymer water dispersion onto a base film formed of a polymer differing from the halogenated vinyl polymer,
wherein the halogenated vinyl polymer water dispersion comprises:
a vinylidene chloride polymer; and
0.3 mass% or more and 1.5 mass% or less, relative to 100 mass% of resin solid content contained in the water dispersion, of an anionic amphiphilic compound, wherein the anionic amphiphilic compound is sodium dodecylbenzene sulfonate, and
wherein the base film is made of polyvinyl chloride, polyester, polyamide, or polypropylene.

2. The multilayer film according to claim 1, wherein the halogenated vinyl polymer water dispersion further comprises sodium pyrophosphate.

3. The multilayer film according to claim 1 or 2, wherein the halogenated vinyl polymer water dispersion further comprises more than 0.12 mass% of a nonionic amphiphilic compound relative to 100 mass% of resin solid content contained in the water dispersion.

4. The multilayer film according to any one of claims 1 to 3, wherein the base film is made of polyvinyl chloride.

5. The multilayer film according to any one of claims 1 to 4, comprising two or more layers of the layer obtained by applying the halogenated vinyl polymer water dispersion.

6. The multilayer film according to any one of claims 1 to 5, wherein at least one layer among the layers obtained by applying the halogenated vinyl polymer water dispersion has a thickness of 1 µm or more.

7. The multilayer film according to any one of claims 1 to 6, wherein at least one layer among the layers obtained by applying the halogenated vinyl polymer water dispersion has a thickness of 30 µm or more.

8. The multilayer film according to any one of claims 1 to 7, having a water content of 1 mass% or less.

9. The multilayer film according to any one of claims 1 to 8, wherein the layer obtained by applying the halogenated vinyl polymer water dispersion has a relative crystallinity of 1.1 or more as measured by a Fourier transform infrared spectrophotometer,
wherein the relative crystallinity is measured by joining from 800 cm⁻¹ to 1320 cm⁻¹ on the IR chart in a linear form and then taking a ratio of peak heights determined by 1046 cm⁻¹ (C-C bonds of polyvinylidene chloride)/1070 cm⁻¹ (CH bonds of polyvinylidene chloride skeleton) to be the relative crystallinity.

10. A blister pack for a medication comprising the multilayer film according to any one of claims 1 to 9.

## Patentansprüche

1. Mehrschichtige Folie umfassend eine Schicht, die erhalten ist durch Aufbringen einer halogeniertes-Vinylpolymer-Wasserdispersion auf eine Basisfolie, die aus einem von dem halogenierten Vinylpolymer verschiedenen Polymer gebildet ist,
wobei die halogeniertes-Vinylpolymer-Wasserdispersion umfasst:
ein Vinylidenchloridpolymer; und
0,3 Masse-% oder mehr und 1,5 Masse-% oder weniger, bezogen auf 100 Masse-% des in der Wasserdispersion enthaltenen Harzfeststoffgehalts, an einer anionischen amphiphilen Verbindung, wobei die anionische amphiphile Verbindung Natriumdodecylbenzolsulfonat ist, und
wobei die Basisfolie aus Polyvinylchlorid, Polyester, Polyamid oder Polypropylen besteht.

2. Mehrschichtige Folie nach Anspruch 1, wobei die halogeniertes-Vinylpolymer-Wasserdispersion ferner Natriumpyrophosphat umfasst.

3. Mehrschichtige Folie nach Anspruch 1 oder 2, wobei die halogeniertes-Vinylpolymer-Wasserdispersion ferner mehr als 0,12 Masse-% an einer nichtionischen amphiphilen Verbindung, bezogen auf 100 Masse-% des in der Wasserdispersion enthaltenen Harzfeststoffgehalts, umfasst.

4. Mehrschichtige Folie nach einem der Ansprüche 1 bis 3, wobei der Basisfilm aus Polyvinylchlorid besteht.

5. Mehrschichtige Folie nach einem der Ansprüche 1 bis 4, umfassend zwei oder mehr Schichten der durch Aufbringen der halogeniertes-Vinylpolymer-Wasserdispersion erhaltenen Schicht.

6. Mehrschichtige Folie nach einem der Ansprüche 1 bis 5, wobei wenigstens eine Schicht der durch Aufbringen der halogeniertes-Vinylpolymer-Wasserdispersion erhaltenen Schichten eine Dicke von 1 µm oder mehr aufweist.

7. Mehrschichtige Folie nach einem der Ansprüche 1 bis 6, wobei wenigstens eine Schicht der durch Aufbringen der halogeniertes-Vinylpolymer-Wasserdispersion erhaltenen Schichten eine Dicke von 30 µm oder mehr aufweist.

8. Mehrschichtige Folie nach einem der Ansprüche 1 bis 7 mit einem Wassergehalt von 1 Masse-% oder weniger.

9. Mehrschichtige Folie nach einem der Ansprüche 1 bis 8, wobei die durch Aufbringen der halogeniertes-Vinylpolymer-Wasserdispersion erhaltene Schicht eine relative Kristallinität von 1,1 oder mehr, wie gemessen durch ein Fouriertransformations-Infrarotspektrophotometer, aufweist,
wobei die relative Kristallinität durch Verbinden von 800 cm⁻¹ mit 1320 cm⁻¹ auf dem IR-Diagramm in einer linearen Form und dann Nehmen eines Verhältnisses von Peakhöhen, bestimmt durch 1046 cm⁻¹ (C-C-Bindungen von Polyvinylidenchlorid)/1070 cm⁻¹ (CH-Bindungen des Polyvinylidenchloridgerüsts), als die relative Kristallinität gemessen wird.

10. Blisterpackung für ein Medikament, umfassend die mehrschichtige Folie nach einem der Ansprüche 1 bis 9.

## Revendications

1. Film multicouche comprenant une couche obtenue par application d'une dispersion aqueuse de polymère vinylique halogéné sur un film de base formé d'un polymère différent du polymère vinylique halogéné,
dans lequel la dispersion aqueuse de polymère vinylique halogéné comprend :
un polymère de chlorure de vinylidène ; et
0,3 % en masse ou plus et 1,5 % en masse ou moins, par rapport à 100 % en masse de la teneur de solide de résine contenue dans la dispersion aqueuse, d'un composé amphiphile anionique, dans lequel le composé amphiphile anionique est le dodécylbenzènesulfonate de sodium, et
dans lequel le film de base est constitué de poly(chlorure de vinyle), polyester, polyamide ou polypropylène.

2. Film multicouche selon la revendication 1, dans lequel la dispersion aqueuse de polymère vinylique halogéné comprend en outre du pyrophosphate de sodium.

3. Film multicouche selon la revendication 1 ou 2, dans lequel la dispersion aqueuse de polymère vinylique halogéné comprend en outre plus de 0,12 % en masse d'un composé amphiphile non ionique par rapport à 100 % en masse de la teneur de solide de résine contenue dans la dispersion aqueuse.

4. Film multicouche selon l'une quelconque des revendications 1 à 3, le film de base étant composé de poly(chlorure de vinyle).

5. Film multicouche selon l'une quelconque des revendications 1 à 4, comprenant deux couches ou plus de la couche obtenue par application de la dispersion aqueuse de polymère vinylique halogéné.

6. Film multicouche selon l'une quelconque des revendications 1 à 5, dans lequel au moins une couche parmi les couches obtenues par application de la dispersion aqueuse de polymère vinylique halogéné a une épaisseur de 1 µm ou plus.

7. Film multicouche selon l'une quelconque des revendications 1 à 6, dans lequel au moins une couche parmi les couches obtenues par application de la dispersion aqueuse de polymère vinylique halogéné a une épaisseur de 30 µm ou plus.

8. Film multicouche selon l'une quelconque des revendications 1 à 7, ayant une teneur en eau de 1 % en masse ou moins.

9. Film multicouche selon l'une quelconque des revendications 1 à 8, dans lequel la couche obtenue par application de la dispersion aqueuse de polymère vinylique halogéné a une cristallinité relative de 1,1 ou plus telle que mesurée par un spectrophotomètre infrarouge à transformée de Fourier,
dans lequel la cristallinité relative est mesurée en joignant de 800 cm⁻¹ à 1 320 cm⁻¹ sur le diagramme IR sous une forme linéaire, puis en prenant un rapport des hauteurs de pics déterminés par 1 046 cm⁻¹ (liaisons C-C du poly(chlorure de vinylidène))/1 070 cm⁻¹ (liaisons CH du squelette de poly(chlorure de vinylidène)) pour être la cristallinité relative.

10. Emballage blister pour un médicament comprenant le film multicouche selon l'une quelconque des revendications 1 à 9.
